(19) Europäisches Patentamt

European Patent Office

Office européen des brevets

(11) Veröffentlichungsnummer: **0 252 268 B1**

(12) # EUROPÄISCHE PATENTSCHRIFT

(45) Veröffentlichungstag der Patentschrift: **25.03.92**

(51) Int. Cl.⁵: **B23K 26/02**

(21) Anmeldenummer: **87107712.9**

(22) Anmeldetag: **27.05.87**

(54) **Verfahren zur Überwachung des Bearbeitungsprozesses mit einer Hochleistungsenergiequelle, insbesondere einem Laser, und Bearbeitungsoptik zur Durchführung desselben.**

(30) Priorität: **11.07.86 DE 3623409**

(43) Veröffentlichungstag der Anmeldung:
**13.01.88 Patentblatt 88/02**

(45) Bekanntmachung des Hinweises auf die Patenterteilung:
**25.03.92 Patentblatt 92/13**

(84) Benannte Vertragsstaaten:
**BE DE FR GB IT NL SE**

(56) Entgegenhaltungen:
**EP-A- 0 156 231**
**EP-A- 0 168 351**
**CH-A- 656 568**
**DE-A- 2 914 216**

**IBM TECHNICAL DISCLOSURE BULLETIN, Band 24, Nr. 9, Februar 1982, Seiten 4691,4692, New York, US; H.E. KLAUSER: "Closed-loop laser control system"**

(73) Patentinhaber: **BIAS Forschungs- und Entwicklungslabor für angewandte Strahltechnik**
**Ermlandstrasse 59**
**W-2820 Bremen 71(DE)**

(72) Erfinder: **Jüptner, Werner, Dr.-Ing.**
**Grosse Loge 8**
**W-2863 Ritterhude(DE)**
Erfinder: **Rothe, Rüdiger, Dr.-Ing.**
**Wilde Rodung 4a**
**W-2820 Bremen 70(DE)**
Erfinder: **Sepold, Gerd, Dr.-Ing.**
**Moosbeerweg 22**
**W-2903 Bad Zwischenahn(DE)**

(74) Vertreter: **Bolte, Erich, Dipl.-Ing. et al**
**c/o Meissner, Bolte & Partner Patentanwälte**
**Hollerallee 73**
**W-2800 Bremen 1(DE)**

## Beschreibung

Die Erfindung betrifft ein Verfahren zur Überwachung des Bearbeitungsprozesses eines Lasers gemäß den Oberbegriffen der Ansprüche 1, 2 und 4 sowie eine Bearbeitungsoptik zur Durchführung des Verfahrens gemäß dem Oberbegriff des Anspruchs 9.

Bei der Materialbearbeitung durch einen Laser, insbesondere einen $CO_2$-Laser, ist es notwendig, zur Qualitätsverbesserung eine Reihe von Einflußgrößen, wie Strahlleistung, Lage des Laserstrahls und/oder des reflektierenden Laserstrahls, zu überwachen.

Die Messung der Strahlleistung eines Lasers geht aus der DE-A-2 914 216 hervor. Es ist ein Strahlungsdetektor zur Messung der Laserstrahlung hinter einem Umlenkstrahlteiler aus strahlungsdurchlässigem Material angeordnet, der den größten Teil der vom Laser emittierten Strahlung zum Werkstück hin umlenkt. Der Umlenkstrahlteiler erfordert einen großen apparativen Aufwand. Die Messung von weiteren, der Verbesserung der Bearbeitungsqualität von Werkstücken dienenden Größen wird in dieser Schrift nicht behandelt.

Die EP-A-0 168 351 betrifft ein Verfahren zur Herstellung von integrierten Schaltkreisen. Bei diesen werden Strahlendetektoren nur zur Positionsbestimmung und zur Korrektur von mechanischen Bewegungen beim Schreiben von Linien auf dem Werkstück eingesetzt. Dabei tastet der Laserstrahl die Strukturen des Werkstückes ab, der von diesem reflektierte Laserstrahl wird in dem Strahlendetektor empfangen und dann ausgewertet, um eine präzise Führung des Laserstrahls zu ermöglichen. Dieses Verfahren ist wegen der zusätzlichen Anwendung von Spiegeln und Strahlteilern recht aufwendig.

Der Erfindung liegt daher die Aufgabe zugrunde, ein Verfahren und eine Bearbeitungsoptik zur Überwachung des Bearbeitungsprozesses eines Lasers anzugeben, wodurch sich die wesentlichen Einflußgrößen auf die Qualität der Materialbearbeitung ermitteln lassen.

Zur Lösung dieser Aufgabe hinsichtlich des Verfahrens dienen die Merkmale der Ansprüche 1, 2 und 4. Dadurch, daß während der Materialbearbeitung die maßgeblichen Einflußgrößen des Laserstrahls gemessen werden, wird die Möglichkeit zur umfassenden integrierten Prozeßüberwachung geschaffen, und zwar dort, wo die Messung nicht nur komplett, sondern auch am einfachsten und zuverlässigsten durchführbar ist, nämlich an der Bearbeitungsoptik. Dieses hat auch Vorteile, wenn der Laser für andere Bearbeitungen eingesetzt werden soll, die keine Bearbeitungsoptik oder eine andere Bearbeitungsoptik erfordern, weil dann nämlich die in solchen Fällen nicht mehr notwendigen, empfindlichen Meßinstrumente nicht mehr ungenutzt am Gerät verbleiben müssen.

Erfindungsgemäß erfolgt an der Bearbeitungsoptik die Messung der für die Leistung des Laserstrahls, die Position desselben zur optischen Achse, des Durchmessers des Laserstrahls, des Verschmutzungsgrades der Spiegel (Umlenkspiegel, Fokussierspiegel) und der zurückreflektierten Laserstrahlung erforderliche Größen durch entsprechend gestaltete Meßwertaufnehmer bzw. -umformer.

Durch entsprechende Umformung der Meßergebnisse ist es möglich, diese direkt entsprechenden Stellantrieben etc. zuzuleiten, die - bei Abweichungen vom Sollwert - entsprechende Korrekturen an der Strahlführung des Lasers vornehmen. Weitere Unteransprüche beziehen sich auf die Verfahren zur Ermittlung der jeweiligen Meßwerte.

Zur Lösung der Aufgabe in bezug auf die Bearbeitungsoptik dient das kennzeichnende Merkmal des Anspruchs 9. Durch die Zuordnung entsprechender Meßumformer (Detektoren) zu dem Umlenkspiegel und dem Fokussierspiegel der Bearbeitungsoptik erfolgt ein Abgreifen der Meßgrößen unmittelbar dort, wo eventuelle Abweichungen zustandekommen können und ein Einfluß auf dieselben ggf. auszuüben ist. Darüber hinaus werden störende Meßeinbauten in der Bearbeitungsoptik vermieden.

Weitere den Unteransprüchen zu entnehmende Merkmale in bezug auf die erfindungsgemäße Bearbeitungsoptik betreffen die konstruktive Ausbildung der Meßwertaufnehmer bzw. -umformer am Umlenkspiegel und Fokussierspiegel zur Ermittlung der speziellen Meßwerte.

Bevorzugte Ausführungsbeispiele der Erfindung werden nachfolgend anhand der Zeichnungen näher erläutert.

Es zeigen:

Fig. 1      den schematischen Aufbau einer Laser-Bearbeitungsvorrichtung in perspektivischer Darstellung,

Fig. 2      einen vertikalen Längsschnitt durch eine Bearbeitungsoptik gemäß eines ersten Ausführungsbeispiels,

Fig. 3      eine Seitenansicht eines umliegenden Spiegels mit einem vertikal geschnittenen Gehäusedeckel und einem dazwischen angeordneten Wärmewiderstand,

Fig. 4      eine Querschnitt durch die Bearbeitungsoptik gemäß der Fig. 2 in der Ebene dreier dem Umlenkspiegel zugeordneten Detektoren,

Fig. 5      einen vertikalen Längsschnitt durch eine Bearbeitungsoptik eines zweiten Ausführungsbeispiels,

Fig. 6      einen Schnitt VI-VI durch die Bearbeitungsoptik gemäß Fig. 5,

Fig. 7    eine Ansicht in Richtung des Pfeils VII auf die Spiegelfläche des Umlenkspiegels,

Fig. 8    einen Umlenkspiegel mit auf der Spiegelfläche angeordneten Sensoren,

Fig. 9    eine Draufsicht auf die Spiegelfläche des Umlenkspiegels gemäß der Fig. 8,

Fig. 10   eine vergrößert dargestellte Einzelheit X des im Bereich eines Sensors geschnittenen Umlenkspiegels gemäß der Fig. 8, und

Fig. 11   eine alternative Ausführungsform zur Anordnung der Sensoren auf der Spiegelfläche des Umlenkspiegels in einer Darstellung gemäß der Fig. 10.

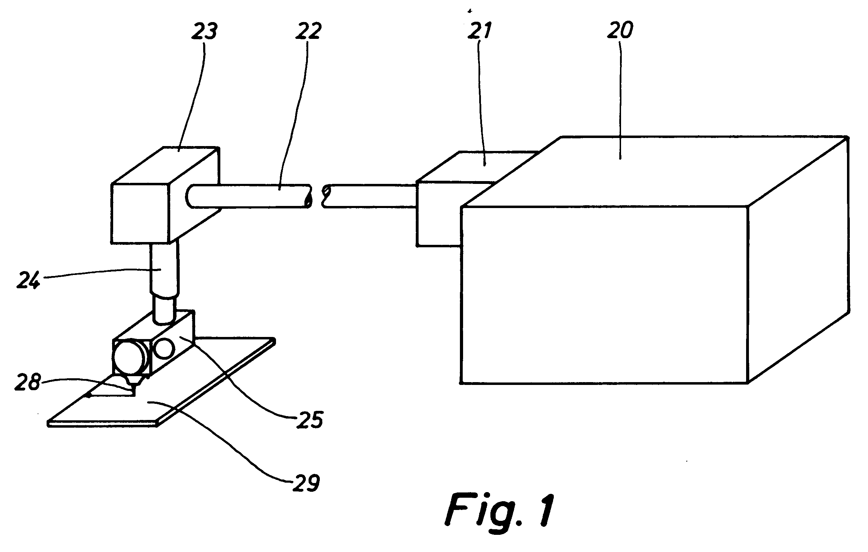

Aus der Fig. 1 geht anschaulich der prinzipielle Aufbau eines Lasers zur Verwirklichung des erfindungsgemäßen Verfahrens mit der erfindungsgemäßen Bearbeitungsoptik hervor. Als Energiequelle dient hier ein Hochleistungslaser, nämlich ein $CO_2$-Laser 20. Am Strahlenausgang des $CO_2$-Lasers 20 befindet sich ein Teleskop 21. Letzteres ist über ein (horizontales) Schutzrohr 22 mit einer Strahlenumlenkoptik 23 verbunden. Durch diese wird der durch das Schutzrohr 22 kommende Laserstrahl aus der horizontalen in eine vertikale Strahlrichtung umgelenkt. Von der Strahlumlenkoptik 23 gelangt der Laserstrahl schließlich durch ein weiteres (vertikales) Schutzrohr 24 zu der Bearbeitungsoptik 25.

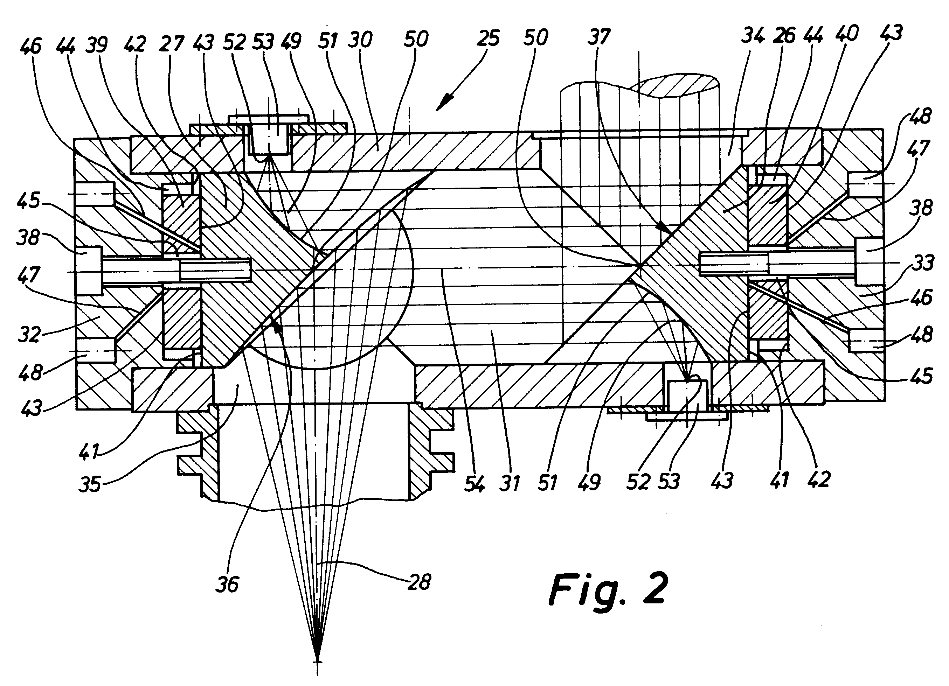

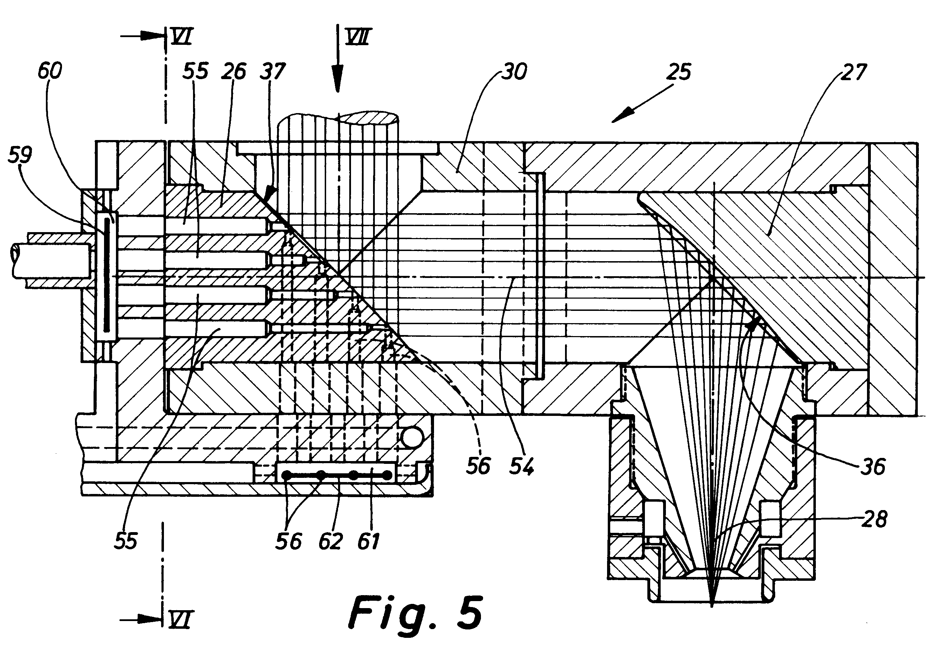

Wie die Fig. 2 und 5 zeigen, ist die Bearbeitungsoptik 25 derart ausgebildet, daß der Laserstrahl in ihr zweimal umgelenkt wird, und zwar durch einen Umlenkspiegel 26 von einer vertikalen in eine horizontale Strahlrichtung und von dieser wiederum durch einen Fokussierspiegel 27 in eine dazu rechtwinklige Austrittsrichtung des Laserstrahls aus der Bearbeitungsoptik.

Den Fig. 2 und 5 ist weiterhin zu entnehmen, daß der Laserstrahl als fokussierter Laserstrahl 28 die Bearbeitungsoptik 25 in vertikaler Richtung verläßt. Mit einem derart fokussierten Laserstrahl 28 lassen sich sowohl Schneid-, Schweiß- als auch Oberflächenveredelungsbearbeitungen an einem Werkstück 29 (Fig. 1) durchführen.

Schließlich kann den Fig. 2 und 5 noch der Aufbau der Bearbeitungsoptik 25 entnommen werden. Demnach verfügt diese über ein längliches, horizontalliegendes Gehäuse 30 mit einem quadratischen Querschnitt. Im Gehäuse 30 ist mittig eine längsgerichtete, kreisrunde Durchgangsbohrung 31 angeordnet. Die gegenüberliegende Stirnseiten des Gehäuses 30 sind durch jeweils einen flanschartig ausgebildeten Deckel 32 bzw. 33 verschlossen.

Das Gehäuse 30 weist mindestens zwei Öffnungen in seinen Wandungen auf, und zwar eine obere Eintrittsöffnung 34 für den von der Strahlumlenkoptik 23 kommenden Laserstrahl und eine Austrittsöffnung 35 zum Austritt des fokussierten Laserstrahls 28 aus der Bearbeitungsoptik 25.

Im Gehäuse 30 der Bearbeitungsoptik 25 sind auch die zur Umlenkung des Laserstrahls erforderlichen Spiegel angeordnet. Im vorliegenden Ausführungsbeispiel ist der Eintrittsöffnung 34 der zylindrisch ausgebildete Umlenkspiegel 26 mit einer unter 45° geneigten, planen Spiegelfläche 37 zugeordnet. Diese lenkt den vertikal in die Bearbeitungsoptik 25 eintretenden Laserstrahl auf einen horizontal zum Fokussierspiegel 27 weiterlaufenden Laserstrahl um. Der ebenfalls zylindrische Fokussierspiegel 27 ist an der dem Umlenkspiegel 26 gegenüberliegenden Seite im Gehäuse 30 angeordnet und verfügt über eine ebenfalls unter 45° verlaufende, aber rotationssymmetrisch konkav ausgebildete Spiegelfläche 36.

Befestigt sind die zentrisch im Gehäuse 30 geführten Spiegel (Umlenkspiegel 26; Fokussierspiegel 27) durch jeweils eine (zentrische) Gewindeschraube 38 an dem jeweils dazugehörenden Deckel 32 bzw. 33.

Erfindungsgemäß ist jedem Spiegel (Umlenkspiegel 26; Fokussierspiegel 27) ein Wärmewiderstand 39 bzw. 40 zugeordnet. Der Wärmewiderstand 40 ist zwischen dem Umlenkspiegel 26 und dem letzteren zugeordneten Deckel 33 angeordnet, und zwar unter Anlage auf der ebenen, aufrechten Rückseite 41 des Umlenkspiegels 26 einerseits und der zu denselben gerichteten inneren Stirnseite 42 des Deckels 33 andererseits. Dementsprechend ist der Umlenkspiegel 40 als kreisrunde Scheibe mit parallelen, aufrechten Kontaktflächen 43 ausgebildet. Durch eine entsprechend im Durchmesser bemessene Ausnehmung 44 im Deckel 33 und eine ausreichend große Durchgangsbohrung 45 in der Mitte des Wärmewiderstandes 40 ist sichergestellt, daß dieser an den Mantelflächen keinerlei Kontakt zum Deckel 33 bzw. zur Gewindeschraube 38 erhält. Dadurch liegen lediglich die Kontaktflächen 43 des Wärmewiderstandes 40 an der Rückseite 41 des Umlenkspiegels 26 und der inneren Stirnseite 42 des Deckels 33 an.

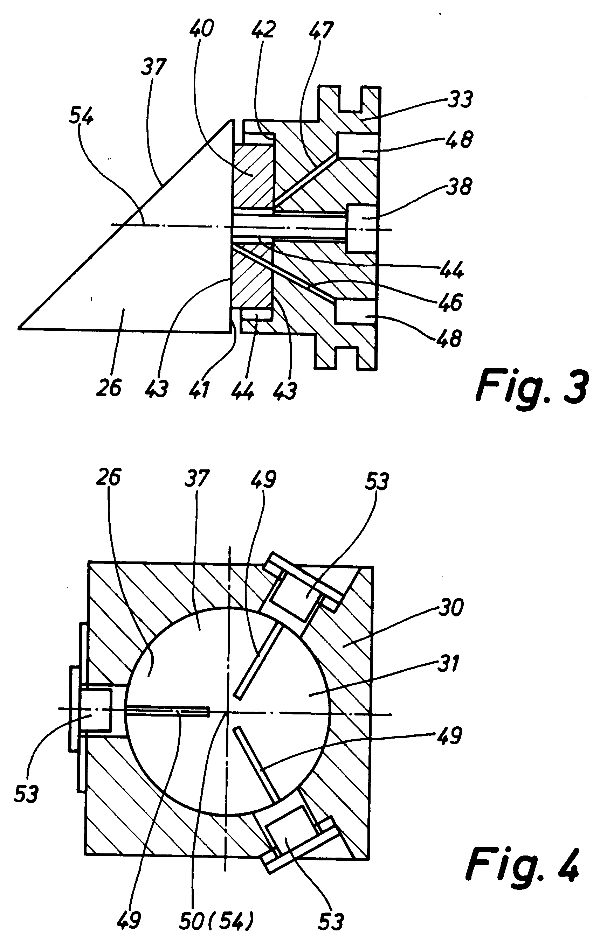

Schräg durch den Deckel 33 und durch den Wärmewiderstand 40 verläuft eine dünne Bohrung 46, die in der zum Umlenkspiegel 26 hingerichteten Kontaktfläche 43 desselben mündet. Eine weitere schräggerichtete Bohrung 47 im Deckel 33 mündet vor der zu demselben gerichteten (äußeren) Kontaktfläche 43 des Wärmewiderstandes 40. Die zur Außenseite des Deckels 33 gerichteten Enden der Bohrungen 46 und 47 sind mit Freimachungen 48 versehen. Auf diese Weise lassen sich im Deckel 33 entsprechende Detektoren (in den Fig. 2 und 3 nicht gezeigt) unterbringen, und zwar derart, daß ihre Fühlerspitzen unter Anlage an der Rückseite 41 des Umlenkspiegels 26 einerseits und der (äußeren) Kontaktfläche 43 des Wärmewiderstandes 40 andererseits münden. Die Detektoren bzw. die Fühlerspitzen derselben sind vorzugsweise als - an sich bekannte - Thermoelemente ausgebildet.

In analoger Weise ist der Wärmewiderstand 39 ausgebildet und hinter dem Fokussierspiegel 27 angeordnet, wobei auch hier entsprechende Bohrungen 46 und 47 für die Zuordnung von Fühlerspitzen entsprechender Detektoren zur Rückseite 41 des Fokussierspiegels 27 und zur Kontaktfläche 43 des Wärmewiderstandes 39 vorgesehen sind.

Die Wärmwiderstände 39 und 40 dienen zur Messung der Strahlleistung sowie des Verschmutzungsgrades des Fokussierspiegels 27. Dabei wird von der Erkenntnis ausgegangen, daß eine nennenswerte Verschmutzung der Bearbeitungsoptik 25 nur am Fokussierspiegel 27, nämlich auf der Spiegelfläche 36 deselben erfolgt, weil nur der oberhalb des Werkstücks 29 liegende Fokussierspiegel 27 negativen Einflüssen infolge der Werkstückbearbeitung ausgesetzt ist. Demgegenüber ist mit einer Verschmutzung des geschützt in der Bearbeitungsoptik 25 liegenden Umlenkspiegels 26 nicht zu rechnen. Der Verschmutzungsgrad des Fokussierspiegels 27 ergibt sich daher aus einer Differenzmessung zwischen den Temperaturen am Umlenkspiegel 26 und am Fokussierspiegel 27. Zu diesem Zweck weisen beide Wärmewiderstände 39 und 40 gleichen Querschnitt, gleiche Dicke und gleiche Wärmedurchgangszeit auf.

Die Strahlleistung wird am Umlenkspiegel 26 gemessen, und zwar durch Ermittlung des Temperaturgradienten zwichen der zur Rückseite 41 des Umlenkspiegels 26 gerichteten Kontaktfläche 43 des Wärmewiderstandes 40 einerseits und zur gegenüberliegenden, zur inneren Stirnseite 42 des Deckels 33 gerichteten Kontaktfläche 43 des Wärmewiderstands 40 einen sich proportional mit der Strahlleistung ändernden Meßwert, wodurch infolge Multiplikation mit einem entsprechenden Übertragungskoeffizienten aus dem Temperaturgradienten unmittelbar die auf den Umlenkspiegel 26 auftreffende Strahlleistung ermittelt werden kann.

Den Fig. 2 und 4 kann entnommen werden, daß sowohl im Umlenkspiegel 26 als auch im Fokussierspiegel 27 radialgerichtete Schlitze 49 angeordnet sind. Diese durchbrechen die entsprechenden Spiegelflächen 36 bzw. 37 sowie die zylindrische Mantelfläche der Spiegel (Umlenkspiegel 26; Fokussierspiegel 27) in schmalen, länglichen Bereichen. Die Schlitze 49 sind symmetrisch in bezug auf Spiegelflächen 36 und 37 der Spiegel (Umlenkspiegel 26; Fokussierspiegel 27) verteilt. Im vorliegenden Falle sind drei um jeweils 120° zueinander versetzte Schlitze 49 vorgesehen (Fig. 4).

Die von der Mantelfläche der Spiegel (Umlenkspiegel 26; Fokussierspiegel 27) ausgehenden Schlitze 49 sind allesamt auf den Mittelpunkt 50 der Spiegelflächen 36 bzw. 37 gerichtet und enden ohne sich zu berühren mit geringfügigem Abstand von demselben. Falls eine größere Auflösung der Meßergebnisse gefordert sein sollte, ist es denkbar, mehrere, insbesondere vier - dann um 90° zueinander versetzte - Schlitze 49 in den Spiegeln (Umlenkspiegel 26; Fokussierspiegel 27) vorzusehen. Die Breite der Schlitze 49 ist derart gewählt, daß diese größer als die Wellenlänge des Lasers ist, beispielsweise 0,4 mm. Dadurch wird sichergestellt, daß durch in infolge der Schlitze 49 entstehende Verringerung der effektiven Spiegelfläche 36 bzw. 37 vernachlässigbar klein ist, das heißt die effektive Laserleistung durch die im Bereich der Schlitze 49 ausgeblendeten Bereiche des Laserstrahls kaum ins Gewicht fällt.

Die Schlitze 49 gehen in bezug auf ihre Tiefe nicht bis zu den Rückseiten 41 der Spiegel (Umlenkspiegel 26; Fokussierspiegel 27) durch. Die dadurch entstehende Schlitzunterseite 51 ist gewölbt ausgebildet, und zwar derart, daß die in die Schlitze 49 von der Spiegelfläche 36 bzw. 37 aus eintretenden Bereiche des in Längsrichtung zur Achse der Spiegel (Umlenkspiegel 26; Fokussierspiegel 27) gerichteten Laserstrahls an den Schlitzunterseiten 51 um annähernd 90° radial nach außen umgelenkt und fokussiert werden. Dadurch liegen die Fokuspunkte 52 der in die Schlitze 49 eintretenden und an den Schlitzunterseiten 51 umgelenkten Bereiche des Laserstrahls mit Abstand von der Mantelfläche außerhalb der Spiegel (Umlenkspiegel 26; Fokussierspiegel 27).

Des weiteren wird durch diese Ausbildung der Schlitze 49 erreicht, daß nur Teilbereiche der in Längsrichtung der Spiegel (Umlenkspiegel 26; Fokussierspiegel 27) einfallenden Laserstrahlen auf die Schlitzunterseiten 51 fallen, also quergerichtete Laserstrahlen die Schlitze 49 nicht beeinflussen.

Alternativ zu Schlitzen 49 können auch entsprechende gegenüber den Spiegelflächen 36, 37 vorstehende Segmente zur Hinleitung der zur Messung bestimmten Bereiche des Laserstrahls an den Spiegeln (Umlenkspiegel 26; Fokussierspiegel 27) angeordnet sein.

Jedem der Fokuspunkte 52 ist ein Detektor 53 zugeordnet, der mit radialem Abstand von den Spiegeln (Umlenkspiegel 26; Fokussierspiegel 27) im Gehäuse 30 der Bearbeitungsoptik 25 gelagert ist. Die Detektoren 53 sind vorzugsweise als Thermosäule handelsüblicher Bauart ausgebildet, die eine optimale Umsetzung der in die Schlitze 49 einfallenden Infrarot-Signale gestatten.

Mit Hilfe der vorstehend beschriebenen (Detektions-)Schlitze 49 in den Spiegeln (Umlenkspiegel 26, Fokussierspiegel 27) und der Detektoren 53 ist es möglich, den Durchmesser des Laserstrahls und seine Lage in bezug auf die optische Achse 54 (Längsmittelachse der Spiegel) der Bearbeitungsoptik 25 zu ermitteln. Zur Erfüllung der erstgenannten Meßaufgabe erfolgt eine Addition der Meßsignale der dem Fokussierspiegel 27 zugeordneten Detektoren 53, also eine Auswertung der durch die Schlitze 49 im Fokussierspiegel 27 eintretenden Laserstrahlen. Da aus der anfangs beschriebenen Messung der Gesamtstrahlleistung die Leistungsflußdichte des Laserstrahls - die in bezug auf den Querschnitt des Laserstrahls konstant ist - bestimmt werden kann, kann aus diesem Wert unter Berücksichtigung der Abmessungen der Schlitze 49, der Anzahl derselben und der Meßergebnisse an den Detektoren 53 bei einem kreisrunden Laserstrahl, der Strahldurchmesser ermittelt werden.

Zur zweiten Meßaufgabe, nämlich der Bestimmung der Lage des Laserstrahls relativ zur optischen Achse 54, dienen ebenfalls die dem Fokussierspiegel 27 zugeordneten Schlitze 49 bzw. Detektoren 53. Allerdings erfolgt hier die Auswertung nicht durch eine Summierung der Meßergebnisse an den einzelnen Detektoren 53; vielmehr wird die Relativlage des Laserstrahls durch Differenzmessungen der in den (Infrarot-)Detektoren 53 einfallenden Leistung ermittelt, indem man den Schwerpunkt des Laserstrahls bezüglich der optischen Achse 54 ermittelt. Bei drei Schlitzen 49 auf der Spiegelfläche 36 des Fokussierspiegels 27 erhält man den Schwerpunkt des Laserstrahls durch Auswertung unter Zugrundelegung eines Polarkoordinatensystems. Hingegen kann bei Verwendung von vier Schlitzen die Auswertung in einem kartesischen Koordinatensystem erfolgen.

Schließlich kann mit Hilfe der (Detektions-)Schlitze 49 auch noch die vom Werkstück 29 zurückreflektierte Laserstrahlung ermittelt werden. Zu diesem Zweck dienen die im Umlenkspiegel 26 angeordneten Schlitze 49 und die denselben zugeordneten Detektoren 53. Aufgrund der am Umlenkspiegel 26 erhaltenen Meßergebnisse können Rückschlüsse auf die Einkopplung des Laserstrahls am Werkstück 29 gezogen werden. Beispielsweise läßt sich so eine Schweißnaht finden bzw. verfolgen, indem der Bearbeitungsoptik 25 entsprechende Stellantriebe zugeordnet werden, die in Abhängigkeit vom Meßergebnis am Umlenkspiegel 26 die Bearbeitungsoptik 25 relativ zum Werkstück 29 verfahren, bis die rückgestrahlten Laserstrahlen ein Minimum erreicht haben, welches ein Indiz dafür ist, daß ein Optimum der Laserstrahlung vom Werkstück 29 absorbiert wird, also die Schweißnaht oder dergleichen gefunden worden ist.

Die Fig. 5 bis 7 zeigen eine alternative Ausführungsform einer Bearbeitungsoptik 25, bei der zur Messung der Strahlposition, des Strahldurchmessers und der zurückreflektierten Laserstrahlen anstelle der im vorstehend beschriebenen Ausführungsbeispiel vorhandenen Schlitze 49 eine Vielzahl rasterartig auf den Spiegelflächen 36 bzw. 37 der Spiegel verteilte Bohrungen vorgesehen sind. Im vorliegenden Ausführungsbeispiel sind die Bohrungen ausschließlich im Umlenkspiegel 26 angeordnet, und zwar als parallel zur Längsmittellinie derselben verlaufende Durchgangsbohrungen 55 und quer dazu verlaufende Durchgangsbohrungen 56. Die Durchgangsbohrungen weisen zur Spiegelfläche 37 einen sehr geringen Durchmesser, nämlich etwa nur 0,5 mm auf. Zur Rückseite des Umlenkspiegels 26 hin nehmen die Durchmesser der Durchgangsbohrungen 55 bzw. 56 zu, und zwar stufenförmig.

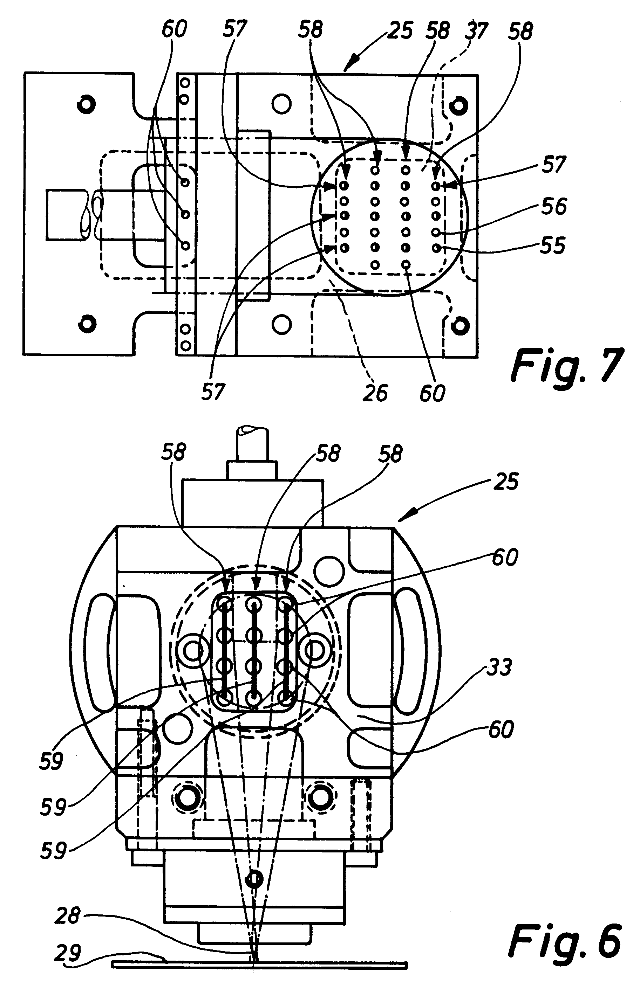

Der Fig. 7 ist zu entnehmen, nach welchem Raster die Durchgangsbohrungen 55 und 56 auf die Spiegelfläche 37 des Umlenkspiegels 26 verteilt sind. Demnach sind hier insgesamt 24 Durchgangsbohrungen vorgesehen, nämlich 12 (horizontale) Durchgangsbohrungen 55 und ebenfalls 12 (vertikale) Durchgangsbohrungen 56. Diese sind auf vier horizontale Reihen 54 und sieben vertikale Reihen 57 bzw. 58 über eine um zwei verringerte Anzahl von Durchgangsbohrungen 55 bzw. 56 verfügen. In der Fig. 7 ist durch Teilschwärzung der Durchgangsbohrungen 55 bzw. 56 angedeutet, ob diese zu einem vertikalen bzw. horizontalen Meßstrang vereint sind. Demnach bilden die ungeschwärzten Durchgangsbohrungen 55 bzw. 56 die horizontalen Meßstränge, während die halbgeschwärzten Durchgangsbohrungen 55 bzw. 56 die vertikalen Meßstränge bilden. Hieraus wird ersichtlich, daß drei vertikale Meßstränge und vier horizontale Meßstränge im vorliegenden Ausführungsbeispiel vorgesehen sind.

Der Fig. 5 ist wiederum die Zuordnung von Detektoren 59 zu den Durchgangsbohrungen 55 bzw. 56 zu entnehmen. Demnach sind die horizontalen Durchgangsbohrungen 55 bereichsweise im Deckel 33 weitergeführt und durch eine quer dazu gerichtete Bohrung 60 verbunden. Diese dient zur Unterbringung eines oder mehrerer geeigneter Detektoren, beispielsweise aus Draht bestehende Widerstandsthermometer. Diese können entweder über den gesamten Meßstrang (Reihe 58) durchgehend verlaufen, können aber auch mittig geteilt sein, so daß jedem Meßstrang (Reihe 58) zwei Detektoren 59 in Form von Widerstandsthermometern zugeordnet sind. In analoger Weise können die Detektoren 61 ausgebildet sein, nämlich auch als Widerstandsthermometer, die in quer zu den vertikalen Durchgangsbohrungen 56 verlaufenden Bohrungen 62 im Gehäuse 30 der Bearbeitungsoptik 25 untergebracht sind.

Die Messung des Durchmessers und der Lage des ankommenden Laserstrahls am Umlenkspiegel 26 erfolgt unter Zuhilfenahme der vertikalen Durchgangsbohrungen 56, während die Messung der Lage, der Leistung - und ggf. des Durchmessers - des vom Werkstück 29 zurückreflektierten Laserlichtes unter Zuhilfenahme der horizontalen Durchgangsbohrungen 55 erfolgt. Die Auswertung der an den Detektoren 59 bzw. 61 erhaltenen Meßergebnisse erfolgt hier in ähnlicher Weise wie beim vorstehend beschriebenen Ausführungsbeispiel mit in den Spiegeln (Umlenkspiegel 26; Fokussierspiegel 27) angeordneten (Detektions-)Schlitzen 49.

Alternativ können die Durchgangsbohrungen 55 und 56 auch bei dieser Ausführungsform der erfindungsgemäßen Bearbeitungsoptik 55 auf den Umlenkspiegel 26 und den Fokussierspiegel 27 verteilt sein, so daß jeder Spiegel dann nur noch entweder über vertikale oder horizontale Durchgangsbohrungen verfügen würde.

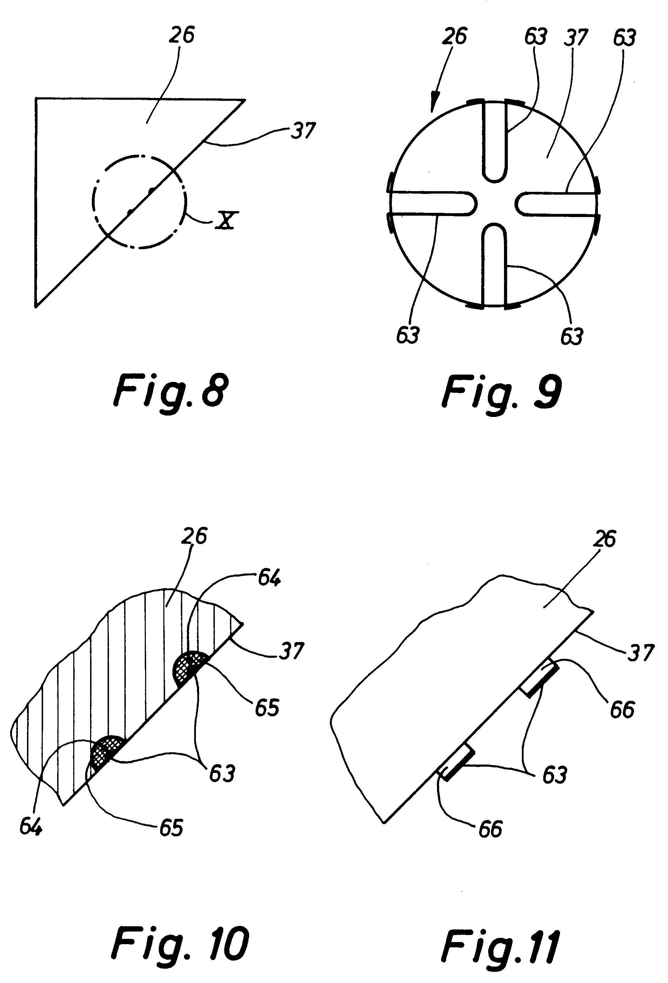

Die Fig. 8 bis 11 zeigen ein Ausführungsbeispiel der erfindungsgemäßen Bearbeitungsoptik 25, bei der unmittelbar auf der Spiegelfläche 37 des Umlenkspiegels 26 absorbierende Sensoren 63 angeordnet sind. Die Sensoren 63 können in der den Fig. 8 - 10 zu entnehmenden Ausführungsform als drahtförmige Widerstandsthermometer ausgebildet sein. Den Verlauf der hier auf der Spiegelfläche 37 des Umlenkspiegels 26 angeordneten Sensoren 63 kann der Fig. 9 entnommen werden. Demnach sind gleichmäßig auf der Spiegelfläche 37 verteilt vier Sensoren 63 aus U-förmig gewundenem Draht radialverlaufend angeordnet und zwar ohne sich im Mittelpunkt 50 der Spiegelfläche 37 zu treffen.

Der Fig. 10 ist die Anbringung der Sensoren 63 auf der Spiegelfläche 37 des Umlenkspiegels 26 zu entnehmen. Dazu sind auf der Spiegelfläche 37 etwa halbkreisförmige Ausnehmungen 64 für die Sensoren 63 angeordnet, die zum Großteil mit einem Isolator 65 ausgefüllt sind, indem jeweils ein Draht für den Sensor 63 derart eingebettet ist, daß die Spiegelfläche 37 trotz der darauf angeordneten Sensoren 63 plan bleibt. Die Isolator 65 besteht vorzugsweise aus einem Kleber zur dauerhaften Fixierung des Drahts für die Sensoren 63 in den Ausnehmungen 64 des Umlenkspiegels 26.

Eine alternative Ausführungsform der Anbringung der Sensoren 63 auf der Spiegelfläche 37 des Umlenkspiegels 26 zeigt die Fig. 11. Hier sind die Sensoren 63 - die ebenfalls den in der Fig. 9 gezeigten Verlauf haben können - erhaben auf der Spiegelfläche 37 angeordnet. Dazu sind die Sensoren 63 aus einem dünnen, schichtförmigen Leiter gebildet, der durch eine Isolationsschicht 66 mit der Spiegelfläche 37 verbunden ist. Derartige Sensoren 63 können beispielsweise durch Aufdampfen auf die Spiegelfläche 37 des Umlenkspiegels 26 hergestellt werden.

**Patentansprüche**

1. Verfahren zur Überwachung des Bearbeitungsprozesses eines Lasers (20), bei dem ein zur Materialbearbeitung (Schneiden, Schweißen, Oberflächenveredeln) dienender Laserstrahl durch eine Bearbeitungsoptik (25) geleitet und während der Materialbearbeitung an der Bearbeitungsoptik (25) zumindest eine maßgebliche Strahlgröße gemessen wird, **dadurch gekennzeichnet,** daß zur Ermittlung der Leistung des Laserstrahls der Temperaturgradient wenigstens eines Spiegels (Umlenkspiegel 26; Fokussierspiegel 27) längs einer definierten Meßstrecke mit definiertem Querschnitt ermittelt wird.

2. Verfahren zur Überwachung des Bearbeitungsprozesses eines Lasers (20), bei dem ein zur Materialbearbeitung (Schneiden, Schweißen, Oberflächenveredeln) dienender Laserstrahl durch eine Bearbeitungsoptik (25) geleitet und während der Materialbearbeitung an der Bearbeitungsoptik (25) zumindest eine maßgebliche Strahlgröße gemessen wird, dadurch gekennzeichnet, daß der Verschmutzungsgrad der Bearbeitungsoptik (25) durch eine Differenzmessung der Temperaturen zwischen zwei Spiegeln (Umlenkspiegel 26; Fokussierspiegel 27) ermittelt wird.

3. Verfahren nach Anspruch 2, dadurch gekennzeichnet, daß der Verschmutzungsgrad des Fokussierspiegels (27) gemessen wird.

4. Verfahren zur Überwachung des Bearbeitungsprozesses eines Lasers (20), bei dem ein zur Materialbearbeitung (Schneiden, Schweißen, Oberflächenveredeln) dienender Laserstrahl durch eine Bearbeitungsoptik (25) geleitet und während der Materialbearbeitung an der Bearbeitungsoptik (25) zumindest eine maßgebliche Strahlgröße gemessen wird, dadurch gekennzeichnet, daß zur Messung des Durchmessers und/oder der Lage des Laserstrahls ausgewählte Teilbereiche des Laserstrahls und/oder rückreflektierte Laserstrahlen auf entsprechende Detektoren (53, 59, 61) geleitet werden.

5. Verfahren nach Anspruch 4, dadurch gekennzeichnet, daß die Leistung der auf die zur Messung ausgewählten Teilbereiche einfallenden Bereiche des Laserstrahls durch die Detektoren (53, 59, 61) in auswertbare Meßsignale umgesetzt wird.

6. Verfahren nach Anspruch 4 oder 5, dadurch gekennzeichnet, daß aus der Summierung der an den Detektoren (53, 59, 61) gemessenen Laserleistung der Durchmesser des Laserstrahls und/oder des rückreflektierten Laserstrahls ermittelt wird.

7. Verfahren nach einem oder mehreren der Ansprüche 4 bis 6, dadurch gekennzeichnet, daß aus der Spiegelfläche (36, 37) der Spiegel (Umlenkspiegel 26; Fokussierspiegel 27) ausgewählte Bereiche des Laserstrahls auf die Detektoren (53, 59, 61) geleitet werden.

8. Verfahren nach einem oder mehreren der Ansprüche 4 bis 7, dadurch gekennzeichnet, daß aus der Differenzbildung zwischen den in einer Linie auf gegenüberliegenden Seiten eines (mittigen) Bezugspunktes (Mittelpunkt 50) des Spiegels (Umlenkspiegel 26, Fokussierspiegel 27) an den Detektoren (53, 59, 61) gemessenen Laserleistung die Lage des Laserstrahls relativ zu dem Bezugspunkt (Mittelpunkt 50) ermittelt wird.

9. Bearbeitungsoptik zur Überwachung des Bearbeitungsprozesses eines Lasers (20) mit einem Umlenkspiegel (26) und einem Fokussierspiegel (27) für den Laserstrahl, die in einem gemeinsamen Gehäuse (30) justierbar angeordnet sind, dadurch gekennzeichnet, daß dem Umlenkspiegel (26) und dem Fokussierspiegel (27) Meßwertaufnehmer (Schlitze 49; Durchgangsbohrungen 55, 56; Sensoren 63) zur Überwachung der maßgeblichen Einflußgrößen des Laserstrahls zugeordnet sind.

10. Bearbeitungsoptik nach Anspruch 9, dadurch gekennzeichnet, daß die Meßwertaufnehmer (Schlitze 49, Durchgangsbohrungen 55, 56) als Übertragungsorgan ausgewählter Teilbereiche des (Laser-)Strahls zu Meßwertumformern (Detektoren 53, 59, 61) ausgebildet sind.

11. Bearbeitungsoptik nach Anspruch 9 oder 10, dadurch gekennzeichnet, daß dem Umlenkspiegel (26) und dem Fokussierspiegel (27) ein Wärmewiderstand (39, 40) zugeordnet ist zur Messung der Leistung des (Laser-)Strahls, der zwischen einer Rückseite (41) der Spiegel (Umlenkspiegel 26; Fokussierspiegel 27) und einer dahinter angeordneten Kühlung (Deckel 32, 33) angeordnet ist.

12. Bearbeitungsoptik nach Anspruch 11, dadurch gekennzeichnet, daß die mit der Rückseite (41) der Spiegel (Umlenkspiegel 26; Fokussierspiegel 27) und der Kühlung (Deckel 32, 33) nicht in Berührung stehenden Flächen der Wärmewiderstände (39, 40) durch entsprechende Freimachungen außer Kontakt mit benachbarten Flächen gebracht sind.

13. Bearbeitungsoptik des Anspruchs 11, dadurch gekennzeichnet, daß an einer zum Fokussierspiegel (27) bzw. Umlenkspiegel (26) gerichteten Kontaktfläche (43) des jeweiligen Wärmewiderstandes (39, 40) Fühlerspitzen entsprechender Detektoren angeordnet sind zur Messung des Temperaturgradienten in den Wärmewiderständen (39, 40).

14. Bearbeitungsoptik nach Anspruch 9 sowie einem oder mehreren der weiteren Ansprüche, dadurch gekennzeichnet, daß die Spiegel (Umlenkspiegel 26; Fokussierspiegel 27) in ausgewählten Bereichen ihrer Spiegelflächen (36, 37) insbesondere als Schlitze (49) und/oder Durchgangsbohrungen (55, 56) ausgebildete Durchbrüche aufweisen zur Beaufschlagung entsprechender Meßwertumformer (Detektoren 53, 59, 61) mit die Durchbrüche überdeckende (Meß-)Bereiche des (Laser-)Strahls.

15. Bearbeitungsoptik nach Anspruch 14, dadurch gekennzeichnet, daß bei als Schlitze (49) ausgebildeten Durchbrüchen die Unterseite der Schlitze (49) derart (kreisbogenförmig) ausgebildet ist, daß Teilbereiche der in Längsrichtung des Spiegels (Umlenkspiegel 26; Fokussierspiegel 27) einfallenden (Laser-)Strahls von der Unterseite jedes Schlitzes (49) fokussiert und um 90° versetzt radial nach außen gespiegelt werden, wobei vorzugsweise jedem Spiegel (Umlenkspiegel 26; Fokussierspiegel 27) wenigstens drei radialgerichtete und gleichmäßig auf die Spiegelfläche (36, 37) verteilt angeordnete Schlitze (49) zugeordnet sind, die ausgehend von der (äußeren) Mantelfläche der Spiegel (Umlenkspiegel 26; Fokussierspiegel 27) bis kurz vor den Mittelpunkt (50) desselben verlaufen, und zwar ohne zusammen zu treffen.

16. Bearbeitungsoptik nach Anspruch 14 oder 15, dadurch gekennzeichnet, daß jedem Schlitz (49) ein im Gehäuse (30) angeordneter Detektor (53) zugeordnet ist, der im Bereich des Fokuspunktes (52) des von dem jeweiligen Schlitz (49) reflektierten Teilbereichs des (Laser-)Strahls angeordnet ist.

17. Bearbeitungsoptik nach Anspruch 14, dadurch gekennzeichnet, daß die als Durchgangsbohrungen ausgebildeten Durchbrüche (55, 56) in den Spiegeln (Umlenkspiegel 26; Fokussierspiegel 27) rasterförmig auf die Spiegelfläche (36, 37) verteilt angeordnet sind, wobei die Durchgangsbohrungen (55, 56) vorzugsweise in Längsrichtung der Spiegel (Umlenkspiegel 26; Fokussierspiegel 27) und/oder quer dazu verlaufen.

18. Bearbeitungsoptik nach Anspruch 17 sowie einem oder mehreren der weiteren Ansprüche, dadurch gekennzeichnet, daß mehreren in einer Hälfte der Spiegelflächen (36, 37) der Spiegel (Umlenkspiegel 26, Fokussierspiegel 27) auf einer radialen Linie liegende Durchgangsbohrungen (55, 56) ein gemeinsamen Detektor (59, 61) zugeordnet ist.

19. Bearbeitungsoptik nach Anspruch 13 sowie einem oder mehreren der weiteren Ansprüche, dadurch gekennzeichnet, daß als Meßwertaufnehmer dienende Sensoren (63) auf der Spiegelfläche (36, 37) der Spiegel (Umlenkspiegel 26; Fokussierspiegel 27) angeordnet sind, vorzugsweise erhaben oder bündig auf der Spiegelfläche (36, 37) aufgeklebt sind.

20. Bearbeitungsoptik nach Anspruch 19, dadurch gekennzeichnet, daß mehrere, vorzugsweise vier, Sensoren (63) aus insbesondere U-förmig gewundenen Drahtschleifen gleichmäßig radialverlaufend verteilt auf der Spiegelfläche (36, 37) der Spiegel (Umlenkspiegel 26, Fokussierspiegel 27) angeordnet sind.

21. Bearbeitungsoptik nach Anspruch 19 oder 20, dadurch gekennzeichnet, daß zwischen den Leitern (Draht, Metallschicht) der Sensoren (63) und der Spiegelfläche (36, 37) eine Isolierschicht angeordnet ist, vorzugsweise aus einem gleichzeitig zur Befestigung der Leiter dienender Kleber.

**Claims**

1. Process for the supervision of the machining process of a laser (20), in which a laser beam serving for material machining (cutting, welding, surface finishing) is conducted through a machining optical system (25) and during the machining of a material at least one governing beam parameter is measured at the machining optical system (25), characterised in that to determine the power of the laser beam the temperature gradient of at least one mirror (deflecting mirror 26; focusing mirror 27) is determined along a defined measurement path with a defined cross-section.

2. Process for the supervision of the machining process of a laser (20), in which a laser beam serving for material machining (cutting, welding, surface finishing) is conducted through a machining optical system (25) and during the machining of a material at least one governing beam parameter is measured at the machining optical system (25), characterised in that the degree of contamination of the machining optical system (25) is determined by means of a difference measurement of the temperatures between two mirrors (deflecting mirror 26; focusing mirror 27).

3. Process according to Claim 2, characterised in that the degree of contamination of the focusing mirror (27) is measured.

4. Process for the supervision of the machining process of a laser (20), in which a laser beam serving for material machining (cutting, welding, surface finishing) is conducted through a machining optical system (25) and during the machining of a material at least one governing beam parameter is measured at the machining optical system (25), characterised in that selected partial regions of the laser beam and/or re-reflected laser beams are conducted to appropriate detectors (53, 59, 61) in order to measure the diameter and/or the position of the laser beam.

5. Process according to Claim 4, characterised in that the power of the regions of the laser beam which are incident on the partial regions selected for the measurement are converted into evaluatable measurement signals by the detectors (53, 59, 61).

6. Process according to Claim 4 or 5, characterised in that the diameter of the laser beam and/or of the rereflected laser beam is determined from the summation of the laser power measured at the detectors (53, 59, 61).

7. Process according to one or more of Claims 4 to 6, characterised in that selected regions of the laser beam are conducted to the detectors (53, 59, 61) from the mirror surface (36, 37) of the mirrors (deflecting mirror 26; focusing mirror 27).

8. Process according to one or more of Claims 4 to 7, characterised in that from the difference formation between the laser power measured in a line on opposite sides of a (central) reference point (centre point 50) of the mirror (deflecting mirror 26, focusing mirror 27) at the detectors (53, 59, 61) the position of the laser beam relative to the reference point (centre point 50) is determined.

9. Machining optical system for the supervision of the machining process of a laser (20), having a deflecting mirror (26) and a focusing mirror (27) for the laser beam, which mirrors are adjustably disposed in a common housing (30), characterised in that measurement value receivers (slits 49; throughbores 55, 56; sensors 63) for supervising the governing parameters of the laser beam are associated with the deflecting mirror (26) and the focusing mirror (27).

10. Machining optical system according to Claim 9, characterised in that the measurement value receivers (slits 49, throughbores 55, 56) are constructed as an element for the transmission of selected partial regions of the (laser) beam to measurement value transducers (detectors 53, 59, 61).

11. Machining optical system according to Claim 9 or 10, characterised in that a thermal resistance (39, 40) is associated with the deflecting mirror (26) and the focusing mirror (27), in order to measure the power of the (laser) beam, which thermal resistance (39, 40) is disposed between a rear surface (41) of the mirrors (deflecting mirror 26; focusing mirror 27) and a cooling arrangement (cover 32, 33) disposed therebehind.

12. Machining optical system according to Claim 11, characterised in that the surfaces of the thermal resistances (39, 40) which are not in contact with the rear surface (41) of the mirrors (deflecting mirror 26; focusing mirror 27) and the cooling arrangement (cover 32, 33) are brought, by means of appropriate clearances, out of contact with adjacent surfaces.

13. Machining optical system of Claim 11, characterised in that at a contact surface (43) of the respective thermal resistance (39, 40), which contact surface is directed to the focusing mirror (27) or deflecting mirror (26), sensor tips of appropriate detectors are disposed, in order to measure the temperature gradient in the thermal resistances (39, 40).

14. Machining optical system according to Claim 9 and one or more of the other claims, characterised in that the mirrors (deflecting mirror 26; focusing mirror 27) exhibit, in selected regions of their mirror surfaces (36, 37), openings constructed in particular as slits (49), and/or throughbores (55, 56) to cause appropriate measurement value transducers (detectors 53, 59, 61) to be acted upon by (measurement) regions of the (laser) beam which cover the openings.

15. Machining optical system according to Claim 14, characterised in that in the case of openings constructed as slits (49) the bottom of the slits (49) is constructed in such a manner (in a circular-arc shape) that partial regions of the (laser) beam incident in the longitudinal direction of the mirror (deflecting mirror 26; focusing mirror 27) are focused by the bottom of each slit (49) and are reflected radially outwards offset by 90°, at least three slits (49) which are directed radially and which are disposed so as to be uniformly distributed on the mirror surface (36, 37) preferably being associated with each mirror (deflecting mirror 26; focusing mirror 27) extend, proceeding from the (outer) envelope surface of the mirrors (deflecting mirror 26; focusing mirror 27), to a short distance in front of the centre point (50) of the same, without meeting.

16. Machining optical system according to Claim 14 or 15, characterised in that a detector (53) disposed in the housing (30) is associated with each slit (49), which detector is disposed in the region of the focal point (52) of the partial region of the (laser) beam reflected by the respective slit (49).

17. Machining optical system according to Claim 14, characterised in that the openings (55, 56) in the mirrors (deflecting mirror 26; focusing mirror 27) constructed as throughbores are disposed so as to be distributed in the manner of a raster on the mirror surface (36, 27), the throughbores (55, 56) preferably extending in the longitudinal direction of the mirrors (deflecting mirror 26; focusing mirror 27) and/or transversely to that direction.

18. Machining optical system according to Claim 17 and one or more of the other claims, characterised in that a common detector (59, 61) is associated with a plurality of throughbores (55, 56) situated in one half of the mirror surfaces (36, 37) of the mirrors (deflecting mirror 26, focusing mirror 27) on a radial line.

19. Machining optical system according to Claim 13 and one or more of the other claims, characterised in that sensors (63) serving as measurement value receivers are disposed on the mirror surface (36, 37) of the mirrors (deflecting mirror 26; focusing mirror 27), and are preferably cemented onto the mirror surface (36, 37) so as to be elevated or flush.

**20.** Machining optical system according to Claim 19, characterised in that a plurality of sensors (63), preferably four, consisting of, in particular, wire loops wound in a U-shape, are disposed so as to be uniformly radially distributed on the mirror surface (36, 37) of the mirrors (deflecting mirror 26, focusing mirror 27).

**21.** Machining optical system according to Claim 19 or 20, characterised in that an insulating layer is disposed between the conductors (wire, metal layer) of the sensors (63) and the mirror surface (36, 37), which insulating layer preferably consists of an adhesive which serves at the same time to secure the conductors.

**Revendications**

**1.** Procédé pour la surveillance d'une opération d'usinage par laser (20), dans lequel un rayon laser servant à l'usinage d'un matériau (coupage, soudage, traitement de surface) est dirigé par une optique d'usinage (25) et dans lequel au moins une valeur caractéristique déterminante du rayon est mesurée dans l'optique d'usinage (25) pendant l'usinage du matériau, caractérisé en ce que, en vue de la détermination de la puissance du rayon laser, on mesure à au moins un miroir (miroir de déviation 26; miroir de focalisation 27) le gradient de température régnant le long d'une distance et sur une section de mesure déterminées.

**2.** Procédé pour la surveillance d'une opération d'usinage par laser (20), dans lequel un rayon laser servant à l'usinage d'un matériau (coupage, soudage, traitement de surface) est dirigé par une optique d'usinage (25) et dans lequel au moins une valeur caractéristique déterminante du rayon est mesurée dans l'optique d'usinage (25) pendant l'usinage du matériau, caractérisé en ce que le degré de contamination de l'optique d'usinage (25) est déterminé par la mesure de la différence de température entre deux miroirs (miroir de déviation 26; miroir de focalisation 27).

**3.** Procédé selon la revendication 2, caractérisé en ce que l'on mesure le degré de contamination du miroir de focalisation (27).

**4.** Procédé pour la surveillance d'une opération d'usinage par laser (20), dans lequel un rayon laser servant à l'usinage d'un matériau (coupage, soudage, traitement de surface) est dirigé par une optique d'usinage (25) et dans lequel au moins une valeur caractéristique déterminante du rayon est mesurée dans l'optique d'usinage (25) pendant l'usinage du matériau, caractérisé en ce que, en vue de la mesure du diamètre et/ou de la position du rayon laser, des fractions choisies du rayon laser et/ou des rayons lasers réfléchis sont dirigées vers des détecteurs appropriés (53, 59, 61).

**5.** Procédé selon la revendication 4, caractérisé en ce que la puissance des fractions du rayon laser incident choisies en vue de la mesure est transformée par les détecteurs (53, 59, 61) en signaux de mesure exploitables.

**6.** Procédé selon la revendication 4 ou 5, caractérisé en ce que l'on détermine le diamètre du rayon laser et/ou du rayon laser réfléchi par sommation de la puissance laser mesurée par les détecteurs (53, 59,61.)

**7.** Procédé selon une ou plusieurs des revendications 4 à 6, caractérisé en ce que des fractions choisies du rayon laser atteignant les surfaces réfléchissantes (36, 37) des miroirs (miroir de déviaion 26; miroir de focalisation 27) sont dirigées vers les détecteurs (53, 59, 61.)

**8.** Procédé selon une ou plusieurs des revendications 4 à 7, caractérisé en ce que l'on détermine la position du rayon laser par rapport à un point de référence (point central 50) à partir de la différence entre les puissances laser mesurées par les détecteurs (53, 59, 61) le long d'une ligne de part et d'autre de ce point de référence (central) (point central 50) des miroirs (miroir de déviation 26; miroir de focalisation 27).

**9.** Optique d'usinage pour la surveillance d'une opération d'usinage par laser (20) comportant un miroir de déviation (26) et un miroir de focalisation (27) pour le rayon laser, qui sont disposés dans un boîtier commun (30) de manière réglable, caractérisée en ce que le miroir de déviation (26) et le miroir de focalisation (27) sont pourvus de capteurs de mesure (fentes 49, trous de passage 55, 56; senseurs 63) en vue de la surveillance de grandeurs caractéristiques du rayon laser ayant une importance déterminante.

**10.** Optique d'usinage selon la revendication 9, caractérisée en ce que les transducteurs (fentes 49, trous de passage 55, 56) forment par association avec des convertisseurs de signaux (détecteurs 53, 59, 61) des organes de transmission pour des fractions choisies du rayon laser.

**11.** Optique d'usinage selon la revendication 9 ou 10, caractérisée en ce que le miroir de déviation (26) et le miroir de focalisation (27) sont pourvus d'une résistance thermique (39, 40) en vue de la mesure de la puissance du rayon laser, qui est disposée entre la face arrière (41) des miroirs (miroir de déviation 26; miroir de focalisation 27) et un refroidissement disposé derrière elle (couvercle 32, 33).

**12.** Optique d'usinage selon la revendication 11, caractérisée en ce que l'on évite par des évidements appropriés tout contact des surfaces de la résistance thermique (39, 40) qui ne touchent ni la face arrière (41) des miroirs (miroir de déviation 26; miroir de focalisation 27) ni le refroidissement (couvercle 32, 33) avec les surfaces voisines.

**13.** Optique d'usinage de la revendication 11, caractérisée en ce que les surfaces de contact (43) des résistances thermiques (39, 40) du miroir de focalisation (27) et du miroir de déviation (26) sont munies chacune d'extrémités sensibles de détecteurs appropriés en vue de la mesure du gradient de température dans les résistances thermiques (39, 40).

**14.** Optique d'usinage selon la revendication 9, ou selon une ou plusieurs des revendications suivantes, caractérisée en ce que des ouvertures sont ménagées dans les miroirs (miroir de déviation 26; miroir de focalisation 27) en des zones choisies de leur surface réfléchissante (36, 37), en particulier sous forme de fentes (49) et/ou de trous de passage (55, 56) couvrant des zones (de mesure) du rayon laser au moyen de convertisseurs de signaux appropriés (détecteurs 53, 59, 61).

**15.** Optique d'usinage selon la revendication 14, caractérisée en ce que le fond des ouvertures constituées par des fentes (49) a une forme telle (forme arquée) que la fraction du rayon laser incident l'atteignant longitudinalement par rapport au miroir (miroir de déviation 26; miroir de focalisation 27) soit focalisée par le fond de chaque fente (49) et réfléchie radialement vers l'extérieur sous un angle de 90°, chaque miroir (miroir de déviation 26; miroir de focalisation 27) étant pourvu de préférence d'au moins trois fentes (49) radiales et réparties uniformément sur la surface réfléchissante (36, 37) partant de la périphérie du miroir (miroir de déviation 26; miroir de focalisation 27) pour arriver à proximité de son centre (50) sans toutefois se rencontrer.

**16.** Optique d'usinage selon la revendication 14 ou 15, caractérisée en ce que chaque fente (49) est associée à un détecteur (53) disposé dans le boîtier (30) au point de focalisation (52) de la fraction du rayon laser réfléchie par chacune des fentes (49).

**17.** Optique d'usinage selon la revendication 14, caractérisée en ce que les ouvertures constituées par des trous de passage (55, 56) sont réparties en réseau sur les surfaces réfléchissantes (36, 37) des miroirs (miroir de déviation 26; miroir de focalisation 27), les trous de passages (55, 56) étant orientés de préférence longitudinalement par rapport aux miroirs (miroir de déviation 26; miroir de focalisation 27) et/ou perpendiculairement à cette direction.

**18.** Optique d'usinage selon la revendication 17 ou selon une ou plusieurs des revendications suivantes, caractérisée en ce qu un détecteur (59, 61) commun est associé à plusieurs trous de passage (55, 56) se trouvant sur une ligne radiale dans une moitié des surfaces réfléchissantes (36, 37) des miroirs (miroir de déviation 26; miroir de focalisation 27).

**19.** Optique d'usinage selon la revendication 13, ou selon une ou plusieurs des revendications suivantes, caractérisée en ce que les senseurs (63) servant de transducteurs de mesure sont disposés sur la surface réfléchissante (36, 37) des miroirs (miroir de déviation 26; miroir de focalisation 27) de préférence par collage en saillie ou à fleur de la surface réfléchissante (36, 37).

**20.** Optique d'usinage selon la revendication 19, caractérisée en ce que plusieurs senseurs (63) de préférence au nombre de quatre, constitués en particulier de boucles de fil en forme de U, sont disposés radialement et uniformément répartis sur la surface réfléchissante (36, 37) des miroirs (miroir de déviation 26; miroir de focalisation 27).

**21.** Optique d'usinage selon la revendication 19 ou 20, caractérisée en ce qu'une couche isolante est appliquée entre les conducteurs (fil, dépôt métallisé) des senseurs (63) et la surface réfléchissante (36, 37), couche qui tient lieu de préférence simultanément d'adhésif servant à la fixation des conducteurs.

EP 0 252 268 B1

23    22    21    20

24

28

25

29

*Fig. 1*

*Fig. 2*

Fig. 3

Fig. 4

14

**Fig. 5**

EP 0 252 268 B1

Fig. 7

Fig. 6

**Fig. 8**

**Fig. 9**

**Fig. 10**

**Fig. 11**